# EUROPÄISCHE PATENTANMELDUNG

(11) **EP 0 960 897 A1**
(43) Veröffentlichungstag der Anmeldung: **01.12.1999**
(21) Anmeldenummer: 99109524.1
(22) Anmeldetag: 11.05.1999
(51) Int. Cl.: C08G 75/04, C09D 181/02, C09J 181/02

(54) **Verfahren zur Herstellung von Polymeren mit 2-Ethyliden-6-hepten-5-olid**

(30) Priorität: 26.05.1998 DE 19823405
(71) Anmelder: Forschungszentrum Karlsruhe GmbH, 76133 Karlsruhe (DE)
(72) Erfinder: Haack, Vera Dr., 76297 Stutensee (DE); Dinjus, Eckhard Prof. Dr., 76774 Leimersheim (DE)

(57) **Zusammenfassung**

Die Erfindung befaßt sich mit der photochemisch initiierten SH-En-Polyaddition von 2-Ethyliden-6-hepten-5-olid. Dabei können hochmolekulare lineare und verzweigte Polymere erhalten werden.

Der Vorteil der Erfindung liegt in der Polyaddition unter Erhalt der Lactonstruktur des 2-Ethyliden-6-hepten-5-olid und in der Variationsbreite der Zusammensetzung der Monomerenmischung. Dadurch werden Polymere mit sehr unterschiedlichen Eigenschaften erzielt.

Bei den in der Ausgangsmischung eingesetzten Monomeren handelt es sich um Thiolmonomere, Dienmonomere und einen Photoinitiator.

## Beschreibung

Die Erfindung betrifft ein Verfahren zur Herstellung von Polymeren mit 2-Ethyliden-6-hepten-5-olid gemäß dem ersten Patentanspruch.

Eine Polymerisation mit 2-Ethyliden-6-hepten-5-olid ist in der Literatur bisher nicht bekannt. Bisher existieren keine Polymere mit diesem Monomer.

Im Vergleich zu Polymeren anderer Herstellungsart bieten photohärtbare Polythiol-/ Polyen-Systeme u. a. extrem hohe Härtungsgeschwindigkeit (Sekunden bis Minuten), exzellente Haftung auf einer Vielzahl von Substraten bei Zusatz spezieller Additive, gute dielektrische Eigenschaften sowie hohe Abriebbeständigkeit.

In der Zeitschrift für Chemie 25 (1986) 220 ist eine basisch bzw. sauer katalysierte Ringöffnung des 2-Ethyliden-6-hepten-5-olids beschrieben worden.

Vorteil der Erfindung ist die photochemisch induzierte SH-En-Polyaddition unter Erhalt der Lactonstruktur des 2-Ethyliden-6-hepten-5-olids. Aufgrund der Verwendungsmöglichkeit des 2-Ethyliden-6-hepten-5-olids für die Polymerenherstellung erhält man ein unweit- und anwenderfreundliches Herstellungsverfahren für lineare und verzweigte Polymere mit der üblichen Variationsbreite in der Zusammensetzung der Monomerenmischung, wodurch Polymere mit sehr unterschiedlichen Eigenschaften erzielt werden.

Die aus 2-Ethyliden-6-hepten-5-olid erhaltenen Polymere sind farblos und transparent, ihre Konsistenz liegt zwischen weich bis hart elastisch. Diese Polymere können z. B. als Klebstoff für optische Linsen verwendet werden. Die Verklebungen sind feuchtigkeitsstabil, farblos und bis 100 °C temperaturstabil. Desweiteren können die Polymere als Beschichtungsmaterial eingesetzt werden.

Der Erfindung liegt die Aufgabe zugrunde, ein umwelt- und anwenderfreundliches Verfahren zur Herstellung eines Beschichtungsmaterials oder eines Klebstoffes mit 2-Ethyliden-6-hepten-5-olid anzugeben.

Die Aufgabe wird durch das im ersten Patentanspruch beschriebene Verfahren gelöst. Bevorzugte Verwendungsmöglichkeiten des Polymers sind in dem dritten Anspruch angegeben.

Erfindungsgemäß wird zur Herstellung des Polymers 2-Ethyliden-6-hepten-5-olid eingesetzt. Durch photoinduzierte SH-En-Polyaddition war es erstmals möglich dieses Monomer unter Erhalt seiner Lactonstruktur in hochmolekulare, lineare oder verzweigte Polymere zu überführen. Mit Pentaerythritol-tetra-kis(3-mercaptopropionat) als Vernetzer werden Netzwerkstrukturen aufgebaut, deren Eigenschaften durch die Struktur der Comonomeren und deren anteilmäßige Zusammensetzung modifiziert werden können.

Ein vereinfachtes Verfahren zur Herstellung hochmolekularer, linearer oder verzweigter Polymere auf Basis des 2-Ethyliden-6-hepten-5-olid wird erreicht durch die photoinduzierte Polymerisation unter Erhalt des Lactonrings.

Je nach Zusammensetzung der Ausgangsmischung liegt der Anteil an 2-Ethyliden-6-hepten-5-olid zwischen 0,5 und 1,5 mol. Abhängig von der Modifikation des Polymers werden die Comonomere mit unterschiedlichen Anteilen der Ausgangsmischung zugegeben:
- Dienmonomere CH₂=CH-R''-CH=CH₂ mit R''=aliphatisch oder aromatisch, R₂-O-R₃ mit R₂,R₃= -Si(CH₃)₂-CH=CH₂, oder R₄-CO-(CH₂)ₙ-CO-R₅ mit R₄,R₅= -OCH₂-CH=CH₂ zwischen 0,1 und 1 mol,
- Thiolmonomere HS-R'-SH mit R'=aliphatisch oder aromatisch, HS-(CH₂)ₙ-Si(CH₃)₂-O-Si(CH₃)₂-(CH₂)ₙ-SH oder HS-(CH₂)ₙ-O-(CH₂)ₙ-O-(CH₂)ₙ-SH zwischen 0,1 und 1,5 mol und
- Photoinitiator Benzildimethylketal mit 0,5 bis 1,5 Ma%.

Von den genannten Dien- und Thiolmonomeren muß der Ausgangsmischung mindestens je eine der genannten Verbindungen zugegeben werden. Als Photoinitiator wird in jedem Fall das Benzildimethylketal verwendet.

Zur photochemisch initiierten Polymerisation wird die Ausgangsmischung nach intensiver Vermengung der Komponenten zwischen 1 Minute und 5 Stunden unter einer Hg-Mitteldrucklampe bestrahlt.

Um die Zusammensetzung der erhaltenen Polymere zu charakterisieren werden die linearen Polymere durch IR- und NMR-Spektroskopie und zusätzlich wie die verzweigten Polymere über die Glasübergangstemperatur, den thermischen Abbau und einer Elementaranalyse charakterisiert.

### Beispiel: Synthese eines Polymers mit 2-Ethyliden-6-hepten-5-olid

Zur Synthese eines Polymers mit 2-Ethyliden-6-hepten-5-olid werden 0,003 mol Pentaerythritol-tetra-kis (3-mercaptopropionat), 0,01mol 2-Ethyliden-6-hepten-5-olid und 0,004 mol 1,3-(Bismercaptopropyl) -1,1',3,3'-tetra-methyldisiloxan eingewogen, mit 1 Ma% Benzildimethylketal versetzt und vermengt. Die Bestrahlung erfolgt unter einer Hg-Mitteldrucklampe (250 W, Breitbandspektrum) ohne Filter. Die Bestrahlungsdauer beträgt 1 Stunde.

Das erhaltene Polymer besitzt eine Glasübergangstemperatur T_{g} von 3 °C, sein thermischer Abbau beginnt bei 260 °C und sein Elastizitätsmodul liegt bei 10⁷ PA (Dynamisch-Mechanische Analyse).

### Beispiele: Charakteristik von linearen und verzweigten Polymere

### A.Lineare Polymere

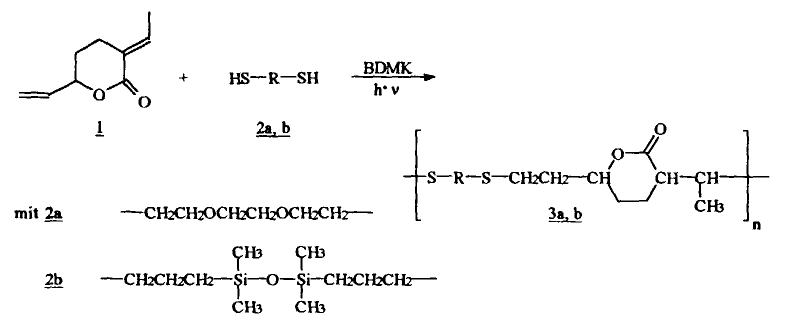

### Polymer 3a:

| (C₁₅H₂₆O₄S₂)ₙ(334,49)ₙ | | | |
|---|---|---|---|
| berechnet | C53.86 | H7.83 | S19.17 |
| gefunden | C54.08 | H7.99 | S19.01 |

IR (KBr): 2923,2864 (CH); 1774, 1723 (C=O) cm⁻¹. 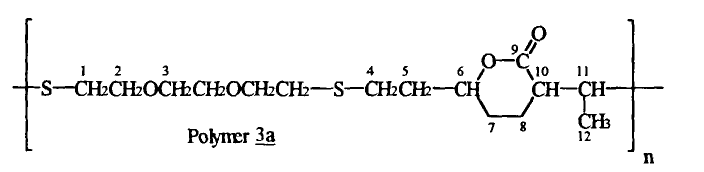
¹³C NMR (62 MHz; CDCl₃): 31.0 (C1); 69.9, 70.6 (C2, C3); 35 (C4); 31.8 (C5); 79.1 (C6); 27.6, 28.15 (C7, C8); 171.4, 172.5 (C9); 42.9 (C10); 47.15 C11); 20.8 (C12) ppm.

### Polymer 3b:

| (C₁₉H₃₈O₃S₂Si₂)ₙ(434.80)ₙ | | | |
|---|---|---|---|
| berechnet | C52.49 | H8.81 | S12.92 |
| gefunden | C52.66 | H8.82 | S14.32 |

IR (Film): 2952, 2921, 2875 (CH); 1778, 1728 (C=O), 1252 (Si(CH₃)₂), 1057 (Si-O-Si) cm⁻¹.
¹³C NMR (62 MHz; CDCl₃): 23.6 (C1); 23.4 (C2); 17.5 (C3); 0.2 (C4); 26.9 (C5); 35.2 (C6); 79.6 (C7) 35.8 (C8); 27.2 (C9); 171.2, 172.3 (C10); 46.8 (C11); 42.3 (C12); 20.9 (C13) ppm.

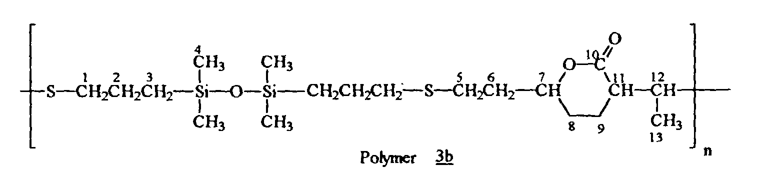

**Tabelle 1**

| Charakteristische Daten der Polymere 3a und 3b | | |
|---|---|---|
| | 3a | 3b |
| Thermischer Abbau⁺ | 250°C | 260°C |
| T_{g}* | -35°C | -38°C |
| Mₙ ** (g mol⁻¹) | 7620 | 7190 |

| | | |
|---|---|---|
| ⁺ unter atmosphärischen Bedingungen, Aufheizrate 10 K·min⁻¹ | | |
| * Glasübergangstemperatur, | | |
| ** Molmasse | | |

### B. Vernetzte Polymere

**Tabelle 2**

| Polymere mit dem tetrafunktionalen Thiol | | | | | | |
|---|---|---|---|---|---|---|
| Polymer | Zusammensetzung (mol) | | | | | |
| | 1 | DAS 4 | DiviSi 5 | 6 | O-SH 2a | Si-SH 2b |
| 8 | 1 | - | - | 0,5 | - | - |
| 9 | 1 | - | - | 0,1 | 0,8 | - |
| 10 | 1 | - | - | 0,1 | - | 0,8 |
| 11 | 1 | - | - | 0,3 | - | 0,4 |
| 12 | 1 | 1 | - | 1,0 | - | - |
| 13^{a} | 1 | - | 1 | 1,0 | - | - |
| 14 | 1 | - | - | 0,3 | 0,4 | - |

| | | | | | | |
|---|---|---|---|---|---|---|
| ^{a} Monomere sind nicht mischbar | | | | | | |
| 1 2-Ethyliden-6-hepten-5-olid | | | | | | |
| 2a 2,2'- (Ethylendioxy)diethanethiol (O-SH) | | | | | | |
| 2b 1,3-bis(3-mercaptopropyl)-1,1,3,3-tetramethyldisiloxan (Si-SH) | | | | | | |
| 4 Diallylsuccinat | | | | | | |
| 5 1,1,3,3-tetramethyl-1,3-divinyldisiloxan (DiviSi) | | | | | | |
| 6 Pentaerythriol-tetra-kis(3-mercapto-propionat) | | | | | | |

### Polymer 8:

| [(C₁₇H₂₈O₈S₄)₀.₅(C₉H₁₂O₂)]ₙ(396.51)ₙ | | | |
|---|---|---|---|
| berechnet | C53.01 | H6.61 | S16.17 |
| gefunden | C53.53 | H6.69 | S15.18 |

IR (KBr): 2958, 2928 (CH); 1737 (C=O); 1243, 1139 (C-O) cm⁻¹. Therischer Abbau(10 K min⁻¹): Starttemperatur bei 270° C, T_{g} - 17° C

### Polymer 9:

| [(C₁₇H₂₈O₈S₄)_{0.1}(C₆H₁₄O₂S₂)_{0,8}(C₉H₁₂O₂)]ₙ(346.89)ₙ | | | |
|---|---|---|---|
| berechnet | C53.67 | H7.55 | S18.48 |
| gefunden | C53.83 | H7.57 | S18.11 |

IR (Kbr): 2924, 2857 (CH); 1733 (C=O); 1254, 1187 (C-O); 1108 (C-O-C) cm⁻¹.
Thermischer Abbau(10 K min⁻¹): Starttemperatur bei 260° C, T_{g} -17° C

### Polymer 10:

| [(C₁₇H₂₈O₈S₄)_{0.1}(C₁₀H₂₆OS₂Si₂)_{0,8}(C₉H₁₂O₂)]ₙ(427.14)ₙ | | | | |
|---|---|---|---|---|
| berechnet | C52.58 | H8.40 | S15.01 | Si10.52 |
| gefunden | C53.69 | H8.38 | S14.74 | Si10.26 |

IR (Kbr): 2952, 2923 (CH); 1733 (C=O); 1252, 1165 (C-O); 1057 (Si-O-Si) cm⁻¹.
Thermischer Abbau(10 K min⁻¹): Starttemperatur bei 250° C, T_{g} -32° C

### Polymer 11:

| [(C₁₇H₂₈O₈S₄)_{0.3}(C₁₀H₂₆OS₂Si₂)_{0,4}(C₉H₁₂O₂)]ⁿ(411.768)ₙ | | | | |
|---|---|---|---|---|
| berechnet | C52.79 | H7.54 | S15.57 | Si5.45 |
| gefunden | C52.86 | H7.54 | S15.29 | Si5.33 |

IR (Kbr): 2955, 2912 (CH); 1736 (C=O); 1253, 1174 (C-O); 1053 (Si-O-Si) cm⁻¹.
Thermischer Abbau(10 K min⁻¹): Starttemperatur bei 260° C, T_{g} - 3° C

### Polymer 12:

| [(C₁₇H₂₈O₈S₄)(C₁₀H₁₄O₄)(C₉H₁₂O₂)]ₙ (839.06)ₙ | | | |
|---|---|---|---|
| berechnet | C51.53 | H6.49 | S15.28 |
| gefunden | C51.67 | H6.39 | S14.97 |

IR (Kbr): 2958, 2927 (CH); 1736 (C=O); 1241, 115 (C-O) cm⁻¹. Thermischer Abbau (10 K min⁻¹): Starttemperatur bei 300° C, T_{g} 0° C.

### Polymer 14:

| [(C₁₇H₂₈O₈S₄)_{0.3}(C₆H₁₄O₂S₂)_{0.4}(C₉H₁₂O₂)](371.71)ₙ | | | |
|---|---|---|---|
| berechnet | C53.32 | H7.05 | S17.25 |
| gefunden | C53.44 | H6.98 | S17.11 |

IR (Kbr): 2925, 2865 (CH); 1737 (C=O); 1245, 1136 (C-O); 1105 (C-O-C) cm⁻¹.
Thermischer Abbau (10 K min⁻¹): Starttemperatur bei 270° C, T_{g} -11° C.

## Patentansprüche

1. Verfahren zur Herstellung von linearen bzw. verzweigten Polymeren auf der Basis von 2-Ethyliden-6-hepten-5-olid durch eine photochemisch induzierte SH-En-Polyaddition, das aus folgenden Verfahrensschritten besteht:
a) Lineare Polymere
1 mol Ethyliden-6-hepten-5-olid und 1 mol HS-R'-SH, mit R'= aliphatisch oder aromatisch, oder
HS-(CH₂)ₙ-Si(CH₃)₂-O-Si(CH₃)₂-(CH₂)ₙ-SH oder HS- (CH₂)ₙ-O-(CH₂)ₙ-O-(CH₂)ₙ-SH und 0,5-1,5 Ma% Benzildimethylketal.
b) Verzweigte Polymere
i) (0,9-1,1) mol Ethyliden-6-hepten-5-olid, (0,4-0,6) mol Pentaerythritol-tetra-kis (3-mercaptopropionat) und 0,5-1,5 Ma% Benzyildimethylketal.
ii) (0,5-1,5) mol Ethyliden-6-hepten-5-olid und
(0,1-1,5) mol Pentaerythritol-tetra-kis(3-mercaptopropionat) und/oder
(0,1-1) mol HS-R'-SH, mit R'=aliphatisch oder aromatisch, und/oder
(0,1-1) mol HS-(CH₂)ₙ-Si(CH₃)₂-O-Si(CH₃)₂-(CH₂)ₙ-SH und/oder
(0,1-1)mol HS- (CH₂)ₙ-O-(CH₂)ₙ-O-(CH₂)ₙ-SH und
(0,1-1) mol CH₂=CH-R''-CH=CH₂, mit R''=aliphatisch oder aromatisch, und/oder
(0,1-1) mol R₂-O-R₃, mit R₂,R₃= -Si(CH3)2-CH=CH2, und/oder
(0,1-1) mol R₄-CO-(CH_{**2**})ₙ-CO-R₅, mit R₄,R₅= -OCH2-CH=CH2, und
0,5-1,5 Ma% Benzyildimethylketal.
c) Photochemisch induzierte SH-En-Polyaddition:
das Ausgangsmaterial wird 1 Minute bis 5 Stunden lang unter einer Hg-Mitteldrucklampe bestrahlt.

2. Verfahren zur Herstellung von linearen bzw. verzweigten Polymeren gemäß Anspruch 1 als eine lösungsmittelfreie Polymerisation.

3. Verwendung des Polymers nach Anspruch 1 als Beschichtungsmaterial oder optischer Klebstoff.
